(19) Europäisches Patentamt
European Patent Office
Office européen des brevets

(11) EP 2 164 816 B1

(12) EUROPEAN PATENT SPECIFICATION

(45) Date of publication and mention of the grant of the patent:
**13.06.2018 Bulletin 2018/24**

(21) Application number: **08723255.9**

(22) Date of filing: **03.03.2008**

(51) Int Cl.:
***C04B 28/00*** *(2006.01)* ***C04B 28/26*** *(2006.01)*

(86) International application number:
**PCT/KR2008/001217**

(87) International publication number:
**WO 2009/005205 (08.01.2009 Gazette 2009/02)**

# (54) ALKALI-ACTIVATED BINDER WITH NO CEMENT, METHOD FOR FABRICATING MORTAR USING IT, AND METHOD FOR FABRICATING ALKALI-ACTIVATED REINFORCEMENT MORTAR WITH NO CEMENT

ZEMENTFREIES ALKALIAKTIVIERTES BINDEMITTEL, VERFAHREN ZUR HERSTELLUNG VON MÖRTEL DAMIT UND VERFAHREN ZUR HERSTELLUNG VON ZEMENTFREIEM ALKALIAKTIVIERTEM ARMIERUNGSMÖRTEL

LIANT SANS CIMENT ACTIVÉ PAR DES ALCALIS, PROCÉDÉ SERVANT À FABRIQUER UN MORTIER UTILISANT CELUI-CI ET PROCÉDÉ SERVANT À FABRIQUER UN MORTIER DE RENFORCEMENT SANS CIMENT ACTIVÉ PAR DES ALCALIS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.06.2007 KR 20070065185**
**26.10.2007 KR 20070108348**

(43) Date of publication of application:
**24.03.2010 Bulletin 2010/12**

(73) Proprietor: **Industry Foundation of Chonnam National University**
**Gwangju 500-757 (KR)**

(72) Inventors:
- **YANG, Keun Hyeok**
  **Seoul 150-805 (KR)**
- **SONG, Jin Kyu**
  **Gwangju 500-795 (KR)**

(74) Representative: **Beck & Rössig European Patent Attorneys**
**Cuvilliésstraße 14**
**81679 München (DE)**

(56) References cited:
**EP-A2- 0 153 097**
**WO-A1-03/078349**
**WO-A1-2004/076378**
**WO-A1-2005/049522**
**WO-A2-2005/097701**
**DE-A1-102004 051 712**
**FR-A1- 2 758 323**
**FR-A1- 2 881 740**
**JP-A- 2006 321 662**
**KR-A- 20010 079 397**
**KR-A- 20070 027 116**
**KR-A- 20070 047 029**
**US-B1- 6 402 833**

- **HARDJITO D ET AL: "Factors Influencing the compressive strength of fly ash-based geopolymer concrete", INTERNET CITATION, 1 September 2004 (2004-09-01), pages 88-93, XP002581669, Retrieved from the Internet: URL:http://puslit2.petra.ac.id/ejournal/index.php/civ/article/view/16116/0 [retrieved on 2010-05-04]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 164 816 B1

## Description

[Technical Field]

The present invention relates to a cement-free alkali activated binder in which alkaline inorganic materials are appropriately added to an industrial waste such as blast furnace slag, fly ash, meta kaolin and the like, a method for producing mortar using the same. Specifically, the present invention relates to a cement-free alkali activated binder that is not only environmentally friendly as being capable of dramatically reducing the carbon dioxide emission, that has been remained as a problem for producing Portland cement, but also has an excellent property.

[Background Art]

Mortar, which is generally used in a construction field, consists of a binder, water and an aggregate, and the binder that is generally used therefor is Portland cement. To produce Portland cement, an enormous amount of energy is required and the amount of carbon dioxide that is generated for producing it consists 7% of the greenhouse gas emitted from the entire world.

Portland cement is produced by mixing in an appropriate ratio source materials comprising silica, alumina and lime as a main component, adding an appropriate amount of gypsum to a clinker in which a part of said mixture is molten and sintered, and pulverizing the resultant to give a powder. In this regard, to prepare such cement clinker, the source materials should be molten at high temperature of about 1450°C so that an enormous amount of energy is consumed during the process (i.e., about 30 to 35ℓ of oil/ton). In addition, to produce a ton of cement, it is known that about 700 to 800Kg of carbon dioxide is released during the process.

Under the circumstances, in order to reduce the amount of carbon dioxide emission (i.e., 0.8 ton) that is accompanied with the production of a ton of cement, concrete-manufacturing companies all over the world try hard to cut off the amount of cement they are using.

[Disclosure]

A cement-free alkali activated binder according to the preamble portion of claim 1 is known from WO 03/078349 A1. More specifically, WO 03/078349 A1 discloses a combination of fly ash, water glass and calcium sulfate.

Further, the flowing binders are known in the art:

EP 0 153 097 A2 discloses a combination of blast furnace slag, sodium hydroxide and potassium silicate.

HARDJITO D ET AL: "Factors Influencing the compressive strength of fly ash-based geopolymer concrete", INTERNET CITATION, 1 September 2004, pages 88-93, XP002581669, discloses a combination of fly ash, sodium hydroxide and sodium silicate.

FR 2,881,740 A1 discloses a combination of blast furnace slag and sodium hydroxide.

WO 2005/097701 A2 discloses a combination of blast furnace slag and aluminium silicate.

WO 2005/049522 A2 discloses a combination of blast furnace slag, fly ash, metakaolin, water glass, sodium silicate, and sodium hydroxide.

WO 2004/076378 A1 discloses a combination of metakaolin and water glass.

[Technical Problem]

Thus, the present invention, which is devised to solve the problems and disadvantages of prior art as described above, has an object of providing a cement-free alkali activated binder in which alkaline inorganic materials are appropriately added to an industrial waste such as blast furnace slag, fly ash, meta kaolin and the like so that the binder is not only environmentally friendly as being capable of dramatically reducing the carbon dioxide emission, but also has an excellent property.

Further, another object of the present invention is to provide a method for producing cement-free alkali activated mortar by mixing an alkali activated binder, which comprises alkaline inorganic materials including sodium materials and source materials comprising at least any one of blast furnace slag, fly ash, and meta kaolin as an industrial waste, with water and sand, wherein depending on initial flow, compression strength after 28 days, and a development model of the

compression strength of the cement-free alkali activated mortar, the mixing ratio among the alkali activated binder, water and sand is determined. As a result, carbon dioxide emission, which has been remained as a problem for producing cement until now, can be dramatically reduced so that the cement-free alkali activated mortar which is not only environmentally friendly but also has an excellent property can be provided.
This technical problem is solved by a cement-free alkali activated binder according to claim 1. Advantageous embodiments are indicated in further claims.
Further, this technical problem is solved by a method of producing cement-free alkali activated mortar. Advantageous embodiments of said method are indicated in further claims.

[Advantageous Effects]

As it has been described in detail in the above, the present invention effectively provides a cement-free alkali activated binder, which has high initial strength, an excellent long-term development of strength, low hydration reaction heat, high chemical resistance, high resistance to freeze and melt, high resistance to fire and low non-elastic deformation, etc. As a result, it can be used not only for general buildings, sea structures, and fire-resistant structures but also for a secondary product such as a block, a brick and a roadside boundary structures, etc. Thus, the cement-free alkali activated binder of the present invention can be efficiently used for a broad range of construction field.
Further, according to the present invention, industrial wastes can be transformed into a binder that can replace conventional Portland cement, thus easing an environmental burden. Further, by saving an energy that is required for burning the binder and not releasing carbon dioxide, an environmentally friendly cement-free alkali activated binder is advantageously provided by the present invention.
Further, according to the present invention, an environmentally friendly preparation method is provided without releasing carbon dioxide, contrast to the conventional process for manufacturing Portland cement. In addition, by using industrial wastes such as blast furnace slag, fly ash, meta kaolin and the like as an alkali activated binder, an environmental burden can be eased and cement-free alkali activated mortar, that can save energy for sintering the alkali activated binder, can be advantageously provided.
Further, the present invention effectively provides a cement-free alkali activated mortar, which has high initial strength, an excellent long-term development of strength, low hydration reaction heat, high chemical resistance, high resistance to freeze and melt, high resistance to fire and low non-elastic deformation, etc.
Further, according to the present invention, cement-free alkali activated reinforcement mortar can be effectively produced without using cement.
Further, according to the present invention, environmentally friendly cement-free alkali activated reinforcement mortar can be effectively produced by using an industrial waste such as blast furnace slag.
Still further, the present invention can effectively provide cement-free alkali activated reinforcement mortar that is suitable for repair and reinforcement of buildings, as having high initial flowability, little loss in flowability with time, and low compression strength.

[Description of Drawings]

Figure 1 and Figure 2 are the photos showing the cement-free alkali activated binder according to the first example of the present invention.
Figure 3 and Figure 4 are the photos showing flow of the mortar that is prepared with the cement-free alkali activated binder according to the first example of the present invention.
Figures 5 to 8 are the graphs showing the compression strength after 28 days and the development of compression strength at different aging time of the mortar, that is prepared with the cement-free alkali activated binder according to the first example of the present invention, in accordance with the weight ratio between the sodium materials and the source materials.
Figure 9 and Figure 10 are the graphs showing the shrinkage strain of the mortar that is prepared with the cement-free alkali activated binder according to the first example of the present invention.
Figures 11 to 13 are the photos showing the cement-free alkali activated mortar that is prepared according to the method for the production of cement-free alkali activated mortar according to the second example of the present invention.
Figure 14 and Figure 15 are the graphs showing the flow of the cement-free alkali activated mortar, that is prepared according to the method for the production of cement-free alkali activated mortar according to the second example of the present invention, in accordance with the ratio between water and the alkali activated binder, or the flow of said mortar in accordance with the ratio between sand and the alkali activated binder.

Figure 16 and Figure 17 are the graphs showing the compression strength after 28 days of the cement-free alkali activated mortar, that is prepared according to the method for the production of the cement-free alkali activated mortar according to the second example of the present invention, in accordance with the weight ratio between water and the alkali activated binder, or the compression strength after 28 days of said alkali activated mortar in accordance with the ratio between sand and the alkali activated binder.

[Best Mode]

[First example]

In the cement-free alkali activated binder of the first example of the present invention, a source material and an alkaline inorganic material are admixed with each other.

In this case, the source material comprises at least any one of blast furnace slag, fly ash, and meta kaolin, and the alkaline inorganic materials comprise at least any one of sodium silicate, sodium hydroxide in powder form, liquid type water glass and liquid type sodium hydroxide.

In this case, for the cement-free alkali activated binder of the present invention, weight ratio between the sodium materials which constitute said alkaline inorganic materials and the source materials is within the range of 0.038 to 0.14. Such weight ratio between the sodium materials and the source materials determines the mechanical properties such as flowability, strength and the shrinkage strain and the like of the cement- free alkali activated binder of the present invention.

In this case, said sodium materials include Na, Na2O and the like. The weight of the sodium materials that is taken to calculate the weight ratio between the sodium materials and the source materials as described above is all based on those converted into $Na_2O$ weight. Specifically, the sodium materials may present as Na, $Na_2O$ and the like in said alkaline inorganic materials including sodium silicate, sodium hydroxide in powder form, liquid type water glass and liquid type sodium hydroxide. In this case, they are all converted into $Na_2O$ weight for calculation. Therefore, when the sodium materials are present as $Na_2O$ weight, the weight is taken as it is, but for the weight of the sodium materials that are present in a form other than $Na_2O$, it is converted into $Na_2O$ weight for calculation.

As such, in order to obtain a cement-free alkali activated binder having desired strength, the weight of the alkaline inorganic materials is determined so as to appropriately control the weight ratio between the sodium materials and the source materials when the source materials and the alkaline inorganic materials are admixed with each other.

In this case, when the source materials are blast furnace slag, the amount of the alkaline inorganic materials are adjusted so that the weight ratio between the sodium materials and the source materials can be within the range of 0.038 to 0.088.

Further, when the source materials are fly ash or meta kaolin, the amount of the alkaline inorganic materials are adjusted so that the weight ratio between the sodium materials and the source materials can be within the range of 0.088 to 0.14.

When liquid type sodium hydroxide is included in the alkaline inorganic materials that are to be incorporated in a cement-free alkali activated binder, sodium hydroxide solution having a concentration of 8 to 16M is used.

In the cement-free alkali activated binder of the present invention, a source material comprising at least any one of blast furnace slag, fly ash and meta kaolin, and the alkaline inorganic materials comprising at least any one of sodium silicate, sodium hydroxide in powder form, liquid type water glass and liquid type sodium hydroxide are admixed with each other. In this case, alumina or silica that are comprised in the source material and the sodium or potassium comprised in the alkaline inorganic material are molten and synthesized to give a solidified cement-free alkali activated binder of the present invention, as it is shown in the following chemical reaction 1.

[Chemical reaction 1]

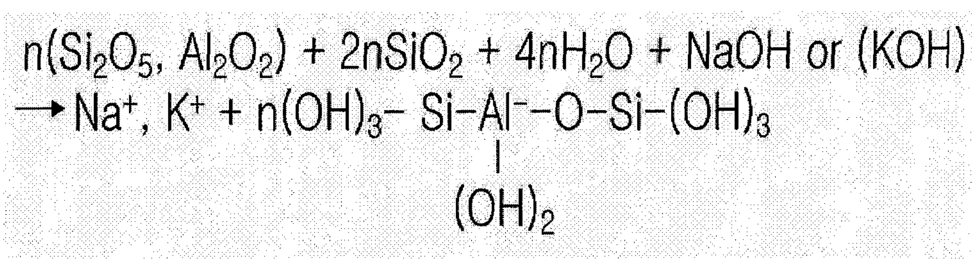

(wherein, any one of NaOH or KOH can be selected and mixed)

Figure 1 and Figure 2 are the photos showing the cement-free alkali activated binder according to the first example of the present invention.

More specifically, Figure 1 is a photo which shows the cement-free alkali activated binder in which blast furnace slag as a source material and sodium silicate, sodium hydroxide and calcium sulfate as an alkaline inorganic material are admixed with each other. Figure 2 is a photo which shows the cement-free alkali activated binder in which fly ash as a source material and sodium silicate, sodium hydroxide and calcium sulfate as an alkaline inorganic material are admixed with each other.

In this case, the cement-free alkali activated binder that are shown in Figure 1 and Figure 2 have a specific gravity of 2.2 to 2.9 and specific surface area of 4000g/$cm^2$, depending on the weight ratio between the sodium materials and the source materials.

Figure 3 and Figure 4 are the photos showing flow of the mortar that is prepared with the cement-free alkali activated binder according to the example of the present invention.

Herein after, 및GBS means a ground granulated blast furnace slag that is obtained by fine pulverization of blast furnace slag to granules with a uniform size.

Herein after, mortar means the mortar which has been produced under the conditions including that ratio of water/cement-free alkali activated binder (i.e., W/B) is 50% and the weight ratio of sand/the source material (i.e., S/B) is 3.0, and the maximum diameter of an aggregate is 5mm or less.

In Figure 3, flowability of the mortar, which has been produced by using cement-free alkali activated binder obtained from a source material such as blast furnace slag or fly ash and alkaline inorganic materials including at least any one of sodium silicate, sodium hydroxide in powder form, liquid type water glass and liquid type sodium hydroxide, is shown in accordance with the weight ratio between the sodium material and the source material.

According to the results indicated in the graph of Figure 3, when the weight ratio between the sodium material and the source material is about 0.015, the initial flow was about 170mm or 180mm, respectively, for the cases having blast furnace slag or fly ash as a source material. In addition, when the weight ratio between the sodium material and the source material is about 0.06, the initial flow was about 200mm or 180mm, respectively, for the cases having blast furnace slag or fly ash as a source material.

Further, while the weight ratio between the sodium material and the source material increases up to about 0.17, the initial flow decreases and it becomes dramatically reduced starting from the specific weight ratio (i.e., about 0.11) when the source material was blast furnace slag. On the other hand, initial flow gradually increases and it becomes stabilized starting from the specific weight ratio (i.e., about 0.08) when the source material was fly ash.

Still further, it was found that, when the source material was fly ash the initial flow is higher than that of conventional Portland cement, regardless of the weight ratio between the sodium material and the source material. When the source material was blast furnace slag the initial flow is higher than that of conventional Portland cement only if the weight ratio between the sodium material and the source material is 0.06 or less.

According to the results shown in the graph of Figure 4, when the weight ratio between the sodium material and the source material (in this case, the source material was blast furnace slag and fly ash) is 0.015 or 0.035, the initial flow in accordance with the change in the weight ratio between $SiO_2$ and the sodium material is affected by the amount of sodium hydroxide.

In other words, the initial flow becomes higher as the amount of sodium hydroxide, which has an overall influence on the amount of the sodium materials, is smaller.

As such, it was found that the mortar based on the cement-free alkali activated binder of the present invention has initial flow that is the same or greater than that required for application in actual field.

Figures 5 to 8 are the graphs showing the compression strength after 28 days and the development of compression strength at different aging time of the mortar, that is prepared with the cement-free alkali activated binder according to the first example of the present invention, in accordance with the weight ratio between the sodium materials and the source materials.

In Figure 5, the compression strength after 28 days increases as the weight ratio between the sodium materials and the source materials (when blast furnace slag was used as a source material) gradually increases. Specifically, when blast furnace slag was used as a source material, the compression strength was about 20MPa even when the weight ratio between the sodium materials and the source materials was 0.03795 (i.e., about 0.038).

Figure 6 shows that the compression strength after 28 days tends to increase as the weight ratio between the sodium materials and the source materials (when fly ash was used as a source material) increases. Specifically, when the weight ratio between the sodium materials and the source materials was less than 0.08855, i.e., less than about 0.088, the compression strength after 28 days was 1MPa or less, and when the ratio was the same or more than 0.088 the compression strength after 28 days was 4MPa or more.

Figure 7 indicates that, when the source material was blast furnace slag the compression strength at different aging time in accordance with the weight ratio between the sodium materials and the source materials is slightly lower

than that of conventional Portland cement specifically when said weight ratio is about 0.038. However, when it is the same or greater than 0.06325, i.e., the same or greater than about 0.063, the mortar based on the cement-free alkali activated binder of the present invention has higher compression strength. Furthermore, it also shows that long term development of the strength is better than conventional Portland cement.

In Figure 8, when the source material was fly ash the compression strength at different aging time in accordance with the weight ratio between the sodium materials and the source materials was excellently developed especially after 56 days. When the weight ratio between the sodium materials and the source materials was low, the compression strength was also low. However, when the weight ratio was 0.11385 (i.e., about 0.114), the compression strength was 16MPa (strength after 91days), and when the ratio was 0.13915 (i.e., about 0.14) the compression strength was 18MPa or more (strength after 91days), which is not lower than the compression strength of conventional Portland cement, so that it can be satisfactorily used in actual field of construction.

Taken together the results and explanations regarding Figures 5 to 8, the cement-free alkali activated binder of the present invention can provide mortar having compression strength of 20MPa or more when the source material is blast furnace slag and the weight ratio between the sodium materials and the source materials is about 0.038 or more and said compression strength is satisfactory compared to those required in an actual construction field. Further, the cement-free alkali activated binder of the present invention can provide mortar having compression strength of 16MPa or more when the source material is fly ash and the weight ratio between the sodium materials and the source materials is about 0.114 or more and said compression strength is slightly lower or higher than that required for mortar that is used in an actual construction field, which is at the level of 20 to 30 MPa. Thus, it is found that the cement-free alkali activated binder of the present invention can be satisfactorily used in an actual construction field.

In this case, since the amount of an alkaline inorganic material increases as the weight ratio between the sodium materials and the source materials becomes higher, when the source material is blast furnace slag it is preferable that the weight ratio between the sodium materials and the source materials is the same or less than 0.088. In addition, when the source material fly ash it is preferable that the weight ratio between the sodium materials and the source materials is the same or less than 0.14. This is because that initial flow decreases as the weight ratio between the sodium materials and the source materials becomes higher and due to high price of the alkaline inorganic materials such as sodium materials, price of the cement-free alkali activated binder of the present invention will be more expensive as more amount of inorganic materials is included in therein.

Figure 9 and Figure 10 are the graphs showing the shrinkage strain of the mortar that is prepared with the cement-free alkali activated binder according to the first example of the present invention.

In Figure 9, the shrinkage strain of the mortar that is prepared using blast furnace slag as a source material is lower than that of the mortar prepared using conventional Portland cement after aging for 14 days, when the weight ratio between the sodium materials and the source materials is the same or less than 0.139 (i.e., the same or less than about 0.14). In this case, extreme shrinkage strain of the alkali activated mortar using blast -6 furnace slag is about $-900\times10^{-6}$ or less.

In Figure 10, the shrinkage strain of the mortar that is prepared using fly ash as a source material is lower than that of the mortar prepared using conventional Portland cement after aging for 14 days, when the weight ratio between the sodium materials and the source materials is 0.114 or less. In addition, even when the weight ratio between the sodium materials and the source materials is 0.139 (i.e., about 0.14) or 0.164, the shrinkage strain is almost at the same level as that of conventional Portland cement mortar. In this case, extreme shrinkage strain of the alkali activated mortar using fly ash is also about $-900\times10^{-6}$ or less.

Thus, the cement-free alkali activated binder of the present invention comprises the source materials comprising at least any one of blast furnace slag, fly ash and meta kaolin, and the alkaline inorganic materials comprising at least any one of sodium silicate, sodium hydroxide in powder form, liquid type water glass and liquid type sodium hydroxide. The cement-free alkali activated binder, which is a mixture of said source materials and the alkaline inorganic materials, has a weight ratio between the sodium materials, which constitutes the alkaline inorganic materials, and the source materials of from 0.038 and 0.14.

In this case, for the cement-free alkali activated binder of the present invention, weight ratio between the sodium materials and the source materials is preferably within the range of 0.038 to 0.088 when the source material is blast furnace slag, in view of the initial flow and the compression strength that are required in an actual construction field. Further, for the cement-free alkali activated binder of the present invention, weight ratio between the sodium materials and the source materials is preferably within the range of 0.114 to 0.14 when the source material is fly ash, in view of the initial flow and the compression strength that are required in an actual construction field.

As described in the above, the present invention was illustrated and explained with reference to preferred examples. However, the present invention is not limited to the examples and it is evident that within the scope of the claims various changes and modifications can be made by a skilled person in the pertinent art.

[Mode for Invention]

[Second example]

The method for producing cement-free alkali activated mortar according to the second example of the present invention is based on mixing of alkaline inorganic materials including sodium materials and source materials comprising at least any one of blast furnace slag, fly ash and meta kaolin, with water and sand to provide cement-free alkali activated mortar.

In this case, the alkaline inorganic materials, which include sodium materials, comprise at least any one of sodium silicate, sodium hydroxide in powder form, liquid type water glass and liquid type sodium hydroxide.

In this case, the alkaline inorganic materials may further comprise at least any one of potassium silicate, calcium sulfate and belite. These compounds of potassium silicate, calcium sulfate and belite are employed to increase the flowability and to control the shrinkage during the subsequent process of producing alkali activated mortar.

The weight ratio between the alkaline inorganic materials and the source materials which constitute said alkaline inorganic materials is within the range of 0.038 to 0.14. Such weight ratio between the alkaline inorganic materials and the source materials determines the mechanical properties such as flowability, strength and the shrinkage strain and the like of the cement-free alkali activated binder of the present invention. Consequently, the mechanical properties of the cement-free alkali activated binder determine the mechanical properties of the cement-free alkali activated mortar that is produced by the method for producing the same of the present invention.

In this case, the alkaline inorganic materials, which include said sodium materials, comprise Na, $Na_2O$ and the like. The weight of said alkaline inorganic materials that is taken to calculate the weight ratio between the alkaline inorganic materials and the source materials is all based on those converted into $Na_2O$ weight. Specifically, the alkaline inorganic materials may present as Na, $Na_2O$ and the like in said alkaline inorganic materials including sodium silicate, sodium hydroxide in powder form, liquid type water glass and liquid type sodium hydroxide. In this case, the weight of Na comprised in said constituent was all converted into $Na_2O$ weight for the calculation.

In this case, when the source materials are blast furnace slag, the amount of the alkaline inorganic materials are adjusted so that the weight ratio between the alkaline inorganic materials and the source materials can be within the range of 0.038 to 0.088.

Moreover, when the source materials are fly ash or meta kaolin, the amount of the alkaline inorganic materials are adjusted so that the weight ratio between the alkaline inorganic materials and the source materials can be within the range of 0.088 to 0.14.

In this case, when the liquid type sodium hydroxide is comprised in the alkaline inorganic materials that are incorporated in the alkali activated binder, a solution of sodium hydroxide having concentration of 8 to 16M is used.

The alkali activated binder in which blast furnace slag is used as a source material can form CSH gel according to a reaction with water. On the other hand, the alkali activated binder in which fly ash or meta kaolin is used as a source material does not form CSH gel according to a reaction with water. In addition, with the reaction between blast furnace slag or fly ash and water, an alumina can be replaced by silica. As a result, the alkali activated binder can be ultimately prepared depending on alkali quality index in view of required strength.

In this case, the alkali quality index ($Q_A$) can be calculated from the following equation, $(\frac{Na_2O}{SiO_2 * Al_2O_3 * CaO} ] B)(byweight)$ In the equation, B represents the total weight of the source material and the alkaline inorganic materials that are used.

For carrying out the method for producing cement-free alkali activated mortar according to the present invention, when an alkali activated binder, sand and water are mixed to prepare cement-free alkali activated mortar, the alkali activated binder comprising the source materials and the alkaline inorganic materials, sand and water are suitably selected so as to satisfy the following Equations 1 to 3.

The following equation 1 is to calculate initial flow ($F_i$) wherein the parameters include alkali quality index ($Q_A$), ratio between water and alkali activated binder (W/B), ratio between specific surface area of a source material and basic specific surface area of a source material ($S_A/S_{A0}$) (in this case, the basic specific surface area of a source material is $4000cm^2/g$), ratio between sand and alkali activated binder (S/B) and basic flow ($F_0$) (in this case, said basic flow corresponds to 100mm).

[Equation 1]

$$F_i = \left( \frac{Q_A^{0.025}}{\left( W/B * \left( \frac{S_A}{S_{A0}} + S/B \right) \right)^{-0.33}} \right)^{-1.32} * F_0 >= 100(mm)$$

As such, once the initial flow value that is required for cement-free alkali activated mortar is decided, the weight ratio among the alkali activated binder comprising the source materials and the alkaline inorganic materials, water and sand, that is calculated from Equation 1 above is determined while considering Equation 2 and Equation 3 below. Further, by mixing the components in said determined weight ratio, cement-free alkali activated mortar is produced, and therefore cement-free alkali activated mortar having a desired initial flow value can be obtained.

In addition, by incorporating each of mixing ratio, which can be obtained from compression strength after 28 days using Equation 2 or Equation 3 below or a model for the development of compression strength, to Equation 1 above, corresponding initial flow can be obtained. As a result, the initial flow according to combination with Equation 1 or Equation 3 below can be obtained.

The following equation 2 is for the calculation of compression strength after 28 days ($(f_{ck})_{28}$) wherein the parameters include alkali quality index ($Q_A$), ratio between water and alkali activated binder (W/B), ratio between specific surface area of a source material and basic specific surface area of a source material ($S_A/S_{A0}$) and $k_1$.

[Equation 2]

$$(f_{ck})_{28} = 148 \left[ \frac{Q_A * \left( \frac{S_A}{S_{A0}} + k_1 \right)^{0.3}}{W/B} \right]^{1.23} * (f_{ck})_0$$

The $k_1$ described in the above equation corresponds to the $0.5^{th}$ power or $-0.5^{th}$ power value of the ratio between sand and alkali activated binder (S/A). When the ratio between sand and alkali activated binder is the same or less than 2.5, the value obtained from the calculation using $(S/A)^{-0.5}$ is incorporated to Equation 2, while when it is more than 2.5 the value obtained from the calculation using $(S/A)^{0.5}$ is incorporated to Equation 2.

In this case, the $(f_{ck})_0$ is a parameter which indicates basic compression strength and it corresponds to 10MPa.

Thus, once the compression strength after 28 days that is required for cement-free alkali activated mortar is decided, the weight ratio among the alkali activated binder comprising the source materials and the alkaline inorganic materials, water and sand, that is calculated from Equation 2 above is determined while considering Equation 1 and Equation 3 below. Further, by mixing the components in said determined weight ratio, cement-free alkali activated mortar is produced, and therefore cement-free alkali activated mortar having a desired compression strength after 28 days can be obtained.

In addition, by incorporating each of mixing ratio, which can be obtained from initial strength using Equation 1 or Equation 3 below or a model for the development of compression strength, to Equation 2 above, corresponding compression strength after 28 days can be obtained. As a result, the compression strength after 28 days according to combination with Equation 1 or Equation 3 below can be obtained.

The following equation 3 is for the calculation of a model for development of compression strength (i.e., compression strength according to different aging time, $f_{ck}(t)$) wherein the parameters include alkali quality index ($Q_A$), ratio between water and alkali activated binder (W/B), ratio between specific surface area of a source material and basic specific surface area of a source material ($S_A/S_{A0}$) and $k_2$.

[Equation 3]

$$f_{ck}(t)=\frac{t}{A_1+B_1}(f_{ck})_{28}$$

In this case, the $A_1$ corresponds to $0.39\left[\frac{(W/B)^2 * k_2^{0.1}}{(1+S_A/S_{A0})^{0.1} * Q_A}\right]^{0.67}$ and the $B_1$ corresponds to $1.08\left[\frac{(W/B)^2 * k_2^{0.1}}{(1+S_A/S_{A0})^{0.1} * Q_A}\right]^{-0.09}$.

With respect to $k_2$, when the ratio between sand and alkali activated binder (S/A) is the same or less than 2.5, the value obtained from the calculation using $(1+S/A)^{0.5}$ is incorporated to Equation 3, while when it is more than 2.5 the value obtained from the calculation using $(1+S/A)^{-0.5}$ is incorporated to Equation 3.

As such, once the model for development of compression strength that is required for cement-free alkali activated mortar is decided, the weight ratio among the alkali activated binder comprising the source materials and the alkaline inorganic materials, water and sand, that is calculated from Equation 3 above is determined while considering Equation 1 and Equation 2 above. Further, by mixing the components in said determined weight ratio, cement-free alkali activated mortar is produced, and therefore cement-free alkali activated mortar having a desired model for development of compression strength can be obtained.

In addition, by incorporating each of mixing ratio, which can be obtained from initial strength using Equation 1 or Equation 2 above or a model for the development of compression strength, to Equation 3 above, corresponding model for development of compression strength can be obtained. As a result, the model for development of compression strength according to combination with Equation 1 or Equation 2 above can be obtained.

Figures 11 to 13 are the photos showing the cement-free alkali activated mortar that is prepared according to the method for the production of cement-free alkali activated mortar according to the second example of the present invention.

More specifically, Figures 11 to 13 are the photos showing the cement-free alkali activated mortar that is prepared as a representative example based on the optimum mixing ratio indicated in Table 1 above. Figure 11 shows the cement-free alkali activated mortar wherein the ratio between water and an alkali activated binder is 50%, the ratio between sand and an alkali activated binder is 3.0 and the source material of the alkali activated binder is furnace blast slag. Figure 12 shows the cement-free alkali activated mortar wherein the ratio between water and an alkali activated binder is 50%, the ratio between sand and an alkali activated binder is 3.0 and the source material of the alkali activated binder is fly ash. Figure 13 shows the cement-free alkali activated mortar wherein the ratio between water and an alkali activated binder is 40%, the ratio between sand and alkali activated binder is 1.0 and the source material of the alkali activated binder is furnace blast slag.

Figure 14 and Figure 15 are the graphs showing the flow of the cement-free alkali activated mortar, that is prepared according to the method for the production of cement-free alkali activated mortar according to the second example of the present invention, in accordance with the ratio between water and the alkali activated binder, or the flow of said mortar in accordance with the ratio between sand and the alkali activated binder.

With respect to Figure 14, the graph of Figure 14 shows the flow of the cement-free alkali activated mortar that is prepared according to the method for the production of cement-free alkali activated mortar according to the second example of the present invention, in accordance with the ratio between water and the alkali activated binder, indicating that the flow value increases as the ratio between water and the alkali activated binder becomes higher.

With respect to Figure 15, the graph of Figure 15 shows the flow of the cement-free alkali activated mortar that is prepared according to the method for the production of cement-free alkali activated mortar according to the second example of the present invention, in accordance with the ratio between sand and the alkali activated binder, indicating that the flow value decreases as the ratio between sand and the alkali activated binder becomes higher.

Consequently, it was found that, the flow value increases as the ratio between water and the alkali activated binder becomes higher while it decreases as the ratio between sand and the alkali activated binder becomes higher.

Figure 16 and Figure 17 are the graphs showing the compression strength after 28 days of the cement-free alkali activated mortar, that is prepared according to the method for the production of the cement-free alkali activated mortar according to the second example of the present invention, in accordance with the weight ratio between water and the alkali activated binder, or the compression strength after 28 days of said alkali activated mortar in accordance with the ratio between sand and the alkali activated binder.

With respect to Figure 16, the graph of Figure 16 shows the compression strength after 28 days of the cement-free alkali activated mortar that is prepared according to the method for the production of the cement-free alkali activated mortar according to the second example of the present invention, in accordance with the ratio between water and the alkali activated binder, indicating that the compression strength after 28 days decreases as the ratio of water becomes higher and the ratio of the alkali activated binder becomes lower.

With respect to Figure 17, the graph of Figure 17 shows the compression strength after 28 days of the cement-free alkali activated mortar that is prepared according to the method for the production of the cement-free alkali activated mortar according to the second example of the present invention, in accordance with the ratio between sand and the alkali activated binder, indicating that the compression strength is the highest when the ratio between sand and the alkali activated binder is 2.5 and when it is 2.5 or more, the compression strength starts to decrease as the ratio between sand and the alkali activated binder becomes higher.

Taken together the results shown in the graphs of Figure 16 and Figure 17, it was found that, the compression strength after 28 days decreases as the ratio between water and the alkali activated binder becomes higher while the compression strength after 28 days increases as the ratio between sand and the alkali activated binder is increased to 2.5.

[Industrial Applicability]

According to the present invention, a cement-free alkali activated binder that is not only environmentally friendly as being capable of dramatically reducing the carbon dioxide emission, which has been remained as a problem for producing Portland cement, but also has an excellent property, a method for producing mortar using the same and a method for producing cement-free alkali activated reinforcement mortar are provided and they can be advantageously used in an actual construction field.

## Claims

1. A cement-free alkali activated binder, that comprises source materials comprising at least any one of blast furnace slag, fly ash and meta kaolin; and alkaline inorganic materials including sodium materials, wherein said alkaline inorganic materials comprise at least any one of sodium silicate, sodium hydroxide in powder form, liquid type water glass and liquid type sodium hydroxide,
   **characterized in that** weight ratio between the sodium materials and the source materials is from 0.038 to 0.14, wherein the sodium materials comprise either Na or $Na_2O$ and the weight of the sodium materials is converted into $Na_2O$ weight for calculation of the weight ratio between the sodium materials and the source materials.

2. The cement-free alkali activated binder according to Claim 1, **characterized in that** said liquid type sodium hydroxide has concentration of 8 to 16M.

3. The cement-free alkali activated binder according to Claim 1 or 2, **characterized in that** the alkaline inorganic materials further comprise at least any one of potassium silicate, calcium sulfate and belite.

4. The cement-free alkali activated binder according to one of Claims 1 to 3, **characterized in that** weight ratio between the sodium materials and the source materials is from 0.038 to 0.088 when the source materials are blast furnace slag.

5. The cement-free alkali activated binder according to one of Claims 1 to 3, **characterized in that** weight ratio between the sodium materials and the source materials is from 0.114 to 0.14 when the source materials are fly ash.

6. A method of producing cement-free alkali activated mortar comprising the step of mixing a cement-free alkali activated

binder according to one of claims 1 to 5, water and sand.

## Patentansprüche

1. Zementfreier, alkaliaktivierter Binder, der Ausgangsmaterialien umfasst, umfassend mindestens eines aus Hochofenschlacke, Flugasche und Metakaolin; und alkalische anorganische Materialien, die Natriummaterialien enthalten, wobei die alkalischen anorganischen Materialien mindestens eines aus Natriumsilikat, Natriumhydroxid in Pulverform, Wasserglas vom flüssigen Typ und Natriumhydroxid vom flüssigen Typ enthalten, **dadurch gekennzeichnet, dass** das Gewichtsverhältnis zwischen den Natriummaterialien und den Ausgangsmaterialien 0,038 bis 0,14 beträgt, wobei die Natriummaterialien entweder Na oder $Na_2O$ umfassen, und das Gewicht der Natriummaterialien in ein $Na_2O$-Gewicht zur Berechnung des Gewichtsverhältnisses zwischen den Natriummaterialien und den Ausgangsmaterialien umgewandelt ist.

2. Zementfreier, alkaliaktivierter Binder nach Anspruch 1, **dadurch gekennzeichnet, dass** das Natriumhydroxid vom flüssigen Typ eine Konzentration von 8 bis 16 M aufweist.

3. Zementfreier, alkaliaktivierter Binder nach Anspruch 1 oder 2, **dadurch gekennzeichnet, dass** die alkalischen anorganischen Materialien des Weiteren mindestens eines aus Kaliumsilicat, Kalziumsulfat und Belit umfassen.

4. Zementfreier, alkaliaktivierter Binder nach einem der Ansprüche 1 bis 3, **dadurch gekennzeichnet, dass** das Gewichtsverhältnis zwischen den Natriummaterialien und den Ausgangsmaterialien 0,038 bis 0,088 beträgt, wenn die Ausgangsmaterialien Hochofenschlacke sind.

5. Zementfreier, alkaliaktivierter Binder nach einem der Ansprüche 1 bis 3, **dadurch gekennzeichnet, dass** das Gewichtsverhältnis zwischen den Natriummaterialien und den Ausgangsmaterialien 0,114 bis 0,14 beträgt, wenn die Ausgangsmaterialien Flugasche sind.

6. Herstellungsverfahren für zementfreien, alkaliaktivierten Mörtel, umfassend den Schritt des Mischens eines zementfreien, alkaliaktivierten Binders nach einem der Ansprüche 1 bis 5 mit Wasser und Sand.

## Revendications

1. Liant sans ciment à activation alcaline qui comprend des matériaux d'origine qui comprennent au moins l'un quelconque des matériaux parmi le laitier de haut-fourneau, les cendres volantes et le méta-kaolin; et des matériaux inorganiques alcalins comprenant des matériaux à base de sodium, lesdits matériaux inorganiques alcalins comprenant au moins l'un quelconque des matériaux suivants parmi le silicate de sodium, l'hydroxyde de sodium en poudre, le verre soluble de type liquide et l'hydroxyde de sodium de type liquide, **caractérisé en ce que** le rapport de poids entre les matériaux à base de sodium et les matériaux d'origine est de 0,038 à 0,14, les matériaux à base de sodium comprenant soit du Na, soit du $Na_2O$ et le poids des matériaux à base de sodium étant converti en poids de $Na_2O$ pour le calcul du rapport de poids entre les matériaux à base de sodium et les matériaux d'origine.

2. Liant sans ciment à activation alcaline selon la revendication 1, **caractérisé en ce que** l'hydroxyde de sodium de type liquide a une concentration de 8 à 16M.

3. Liant sans ciment à activation alcaline selon la revendication 1 ou 2, **caractérisé en ce que** les matériaux inorganiques alcalins comprennent de plus au moins l'un quelconque des matériaux suivants parmi le silicate de potassium, le sulfate de calcium et le bélite.

4. Liant sans ciment à activation alcaline selon l'une des revendications 1 à 3, **caractérisé en ce que** le rapport de poids entre les matériaux à base de sodium et les matériaux d'origine est de 0,038 à 0,088 lorsque les matériaux d'origine sont du laitier de haut-fourneau.

5. Liant sans ciment à activation alcaline selon l'une des revendications 1 à 3, **caractérisé en ce que** le rapport de poids entre les matériaux à base de sodium et les matériaux d'origine est de 0,114 à 0,14 lorsque les matériaux d'origine sont des cendres volantes.

**6.** Procédé de production d'un liant sans ciment à activation alcaline comprenant l'étape de mélange du liant sans ciment à activation alcaline selon l'une des revendications 1 à 5, de l'eau et du sable.

【Figure 1】

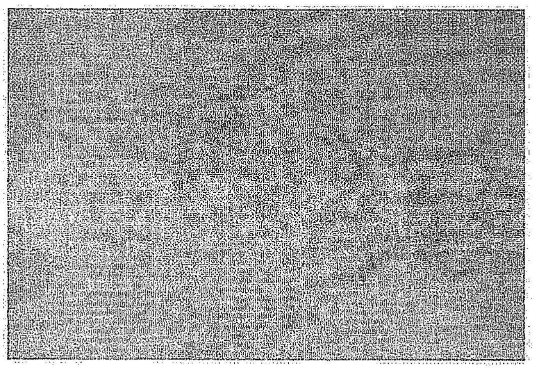

【Figure 2】

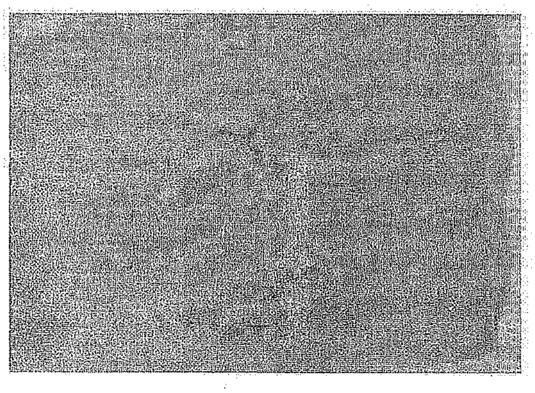

【Figure 3】

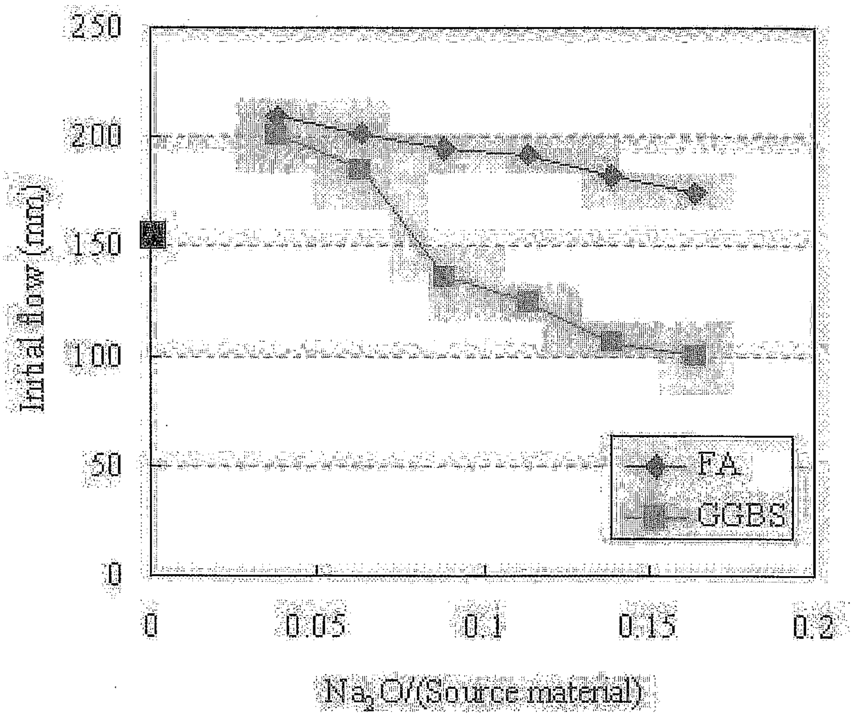

【Figure 4】

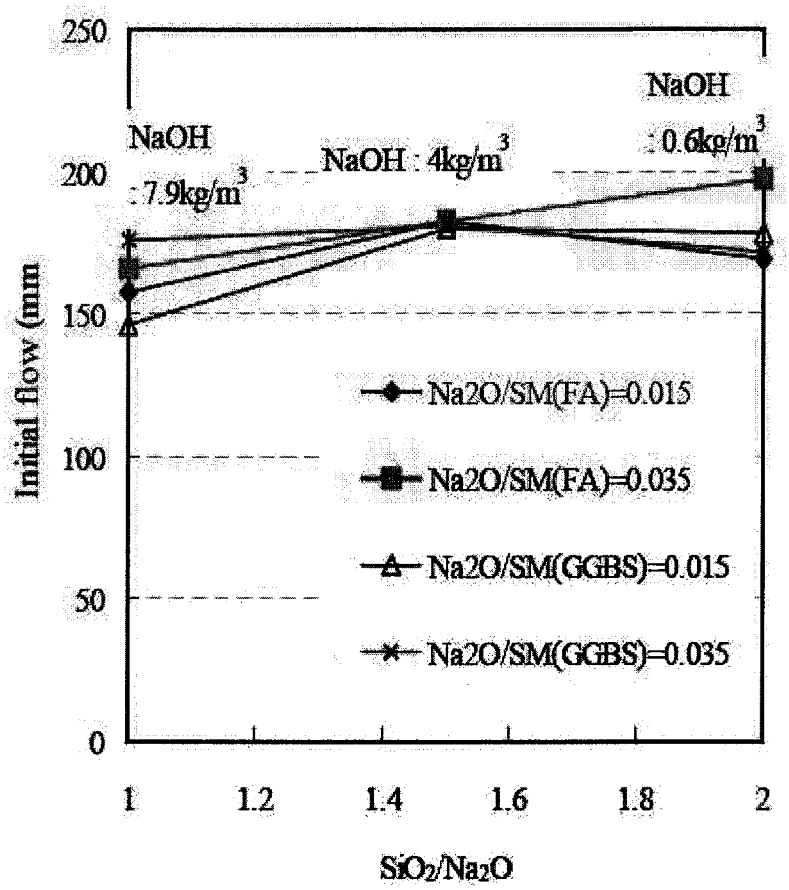
NaOH
: 7.9kg/m3
NaOH : 4kg/m3
NaOH
: 0.6kg/m3
Initial flow (mm
250
200
150
100
50
0
1
1.2
1.4
1.6
1.8
2
SiO2/Na2O
Na2O/SM(FA)=0.015
Na2O/SM(FA)=0.035
Na2O/SM(GGBS)=0.015
Na2O/SM(GGBS)=0.035

【Figure 5】

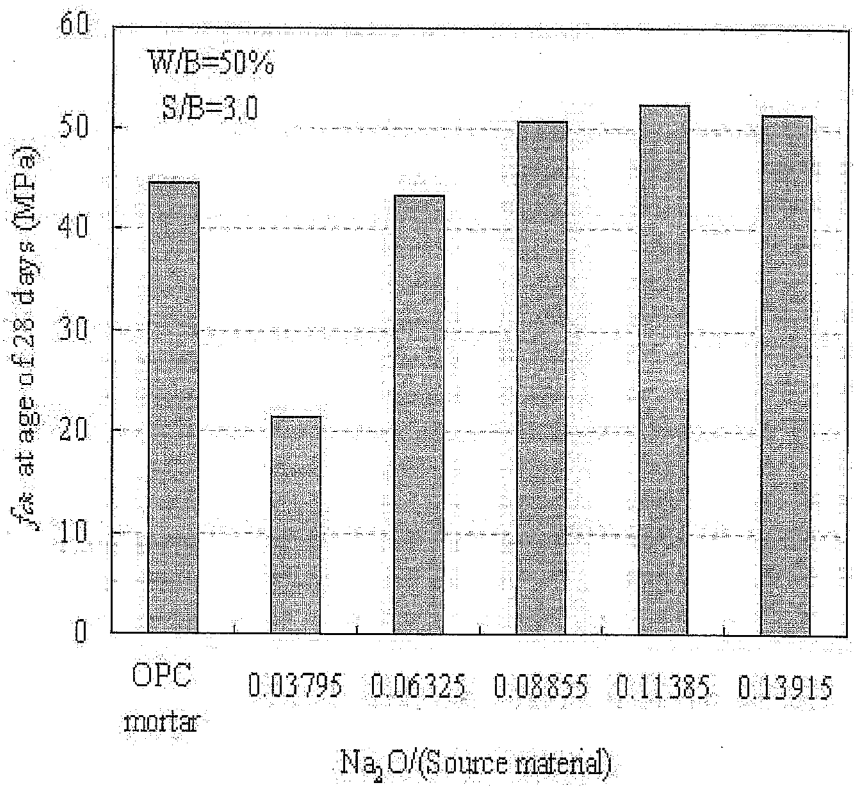


【Figure 6】

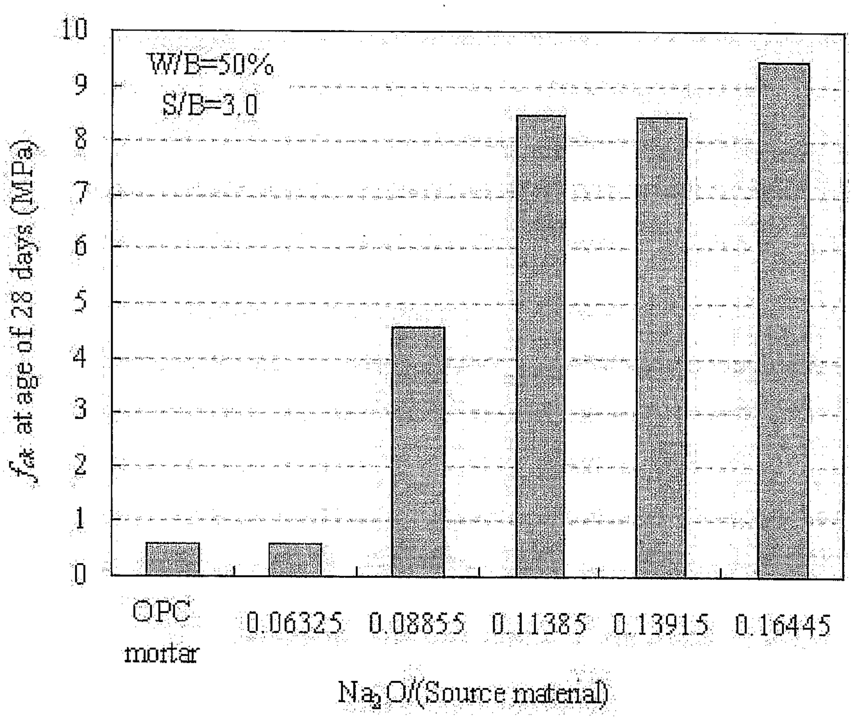

【Figure 7】

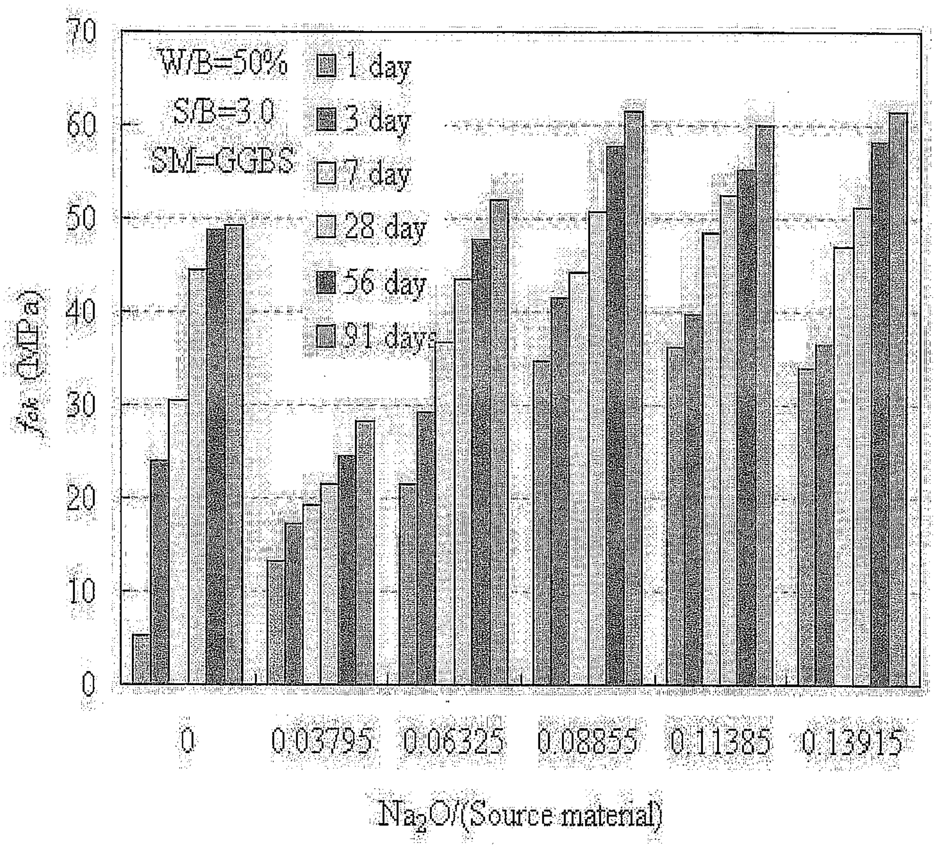
W/B=50%
S/B=3.0
SM=GGBS
1 day
3 day
7 day
28 day
56 day
91 days
70
60
50
40
30
20
10
0
fck (MPa)
0
0.03795
0.06325
0.08855
0.11385
0.13915
Na2O/(Source material)

【Figure 8】

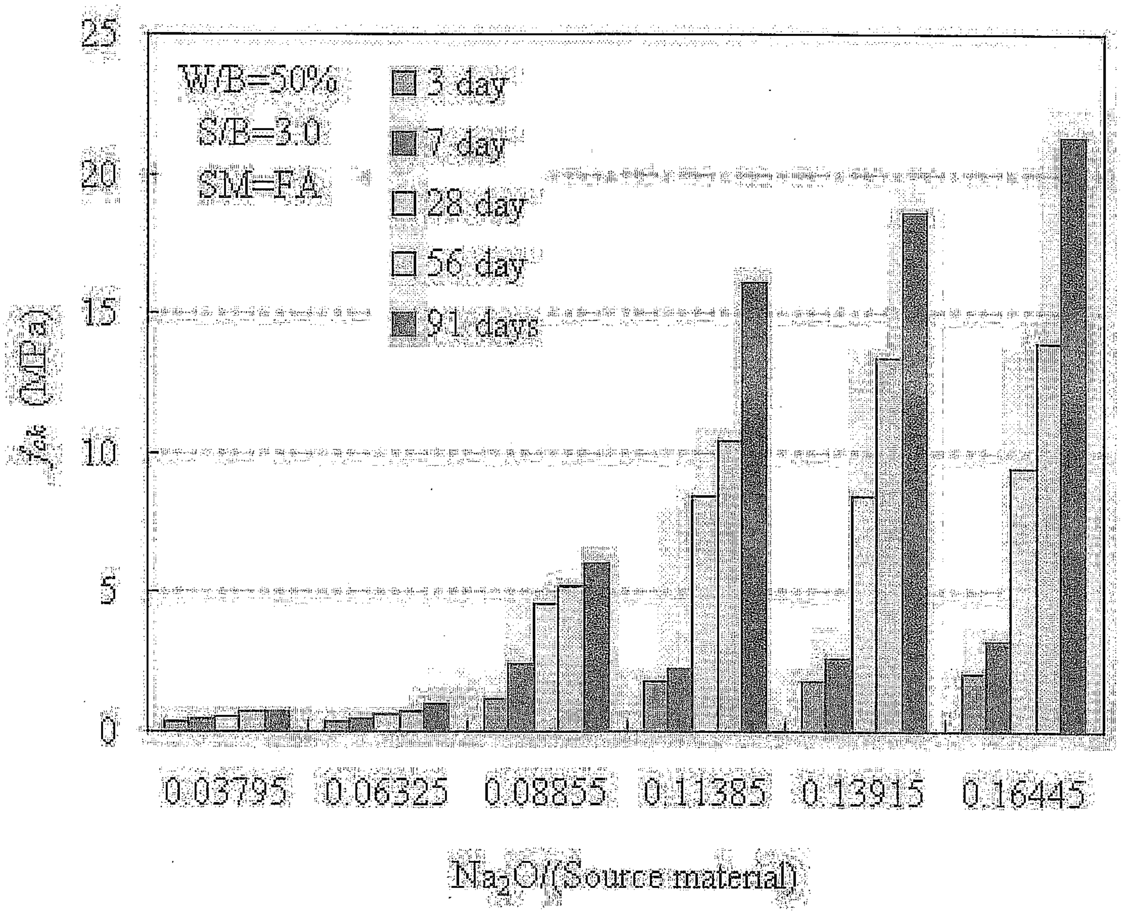
W/B=50%
S/B=3.0
SM=FA
3 day
7 day
28 day
56 day
91 days
0
5
10
15
20
25
$f_{ck}$ (MPa)
0.03795
0.06325
0.08855
0.11385
0.13915
0.16445
$Na_2O$/(Source material)

【Figure 9】

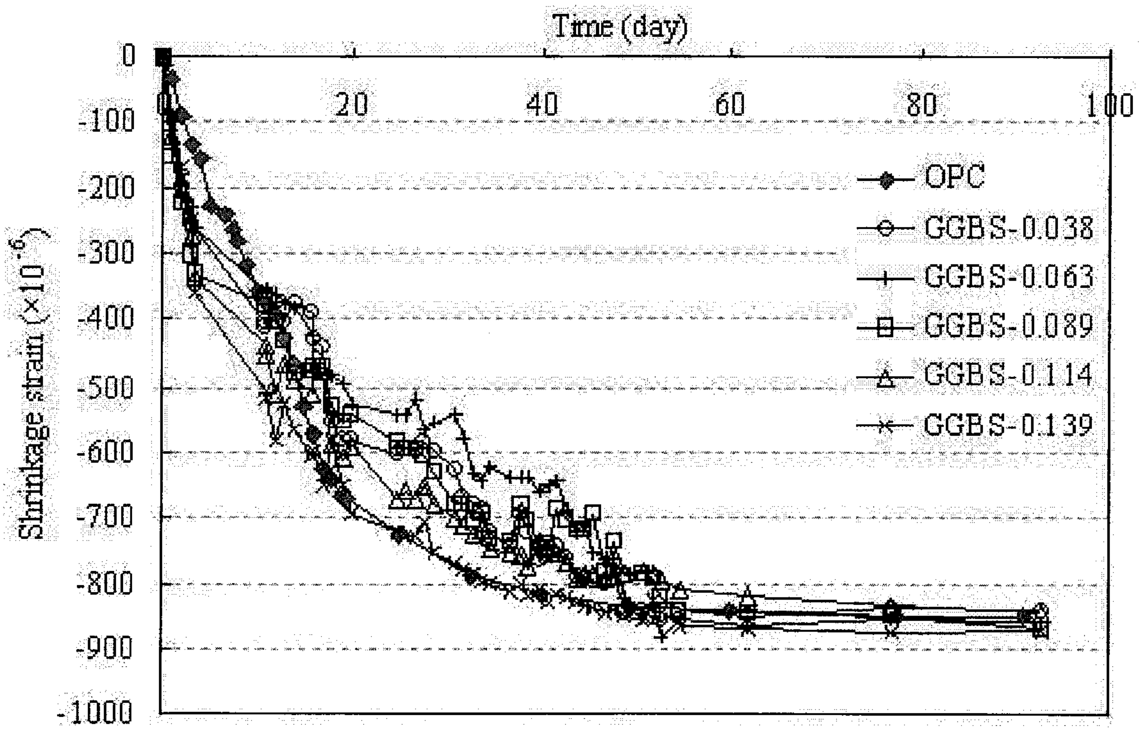


【Figure 10】

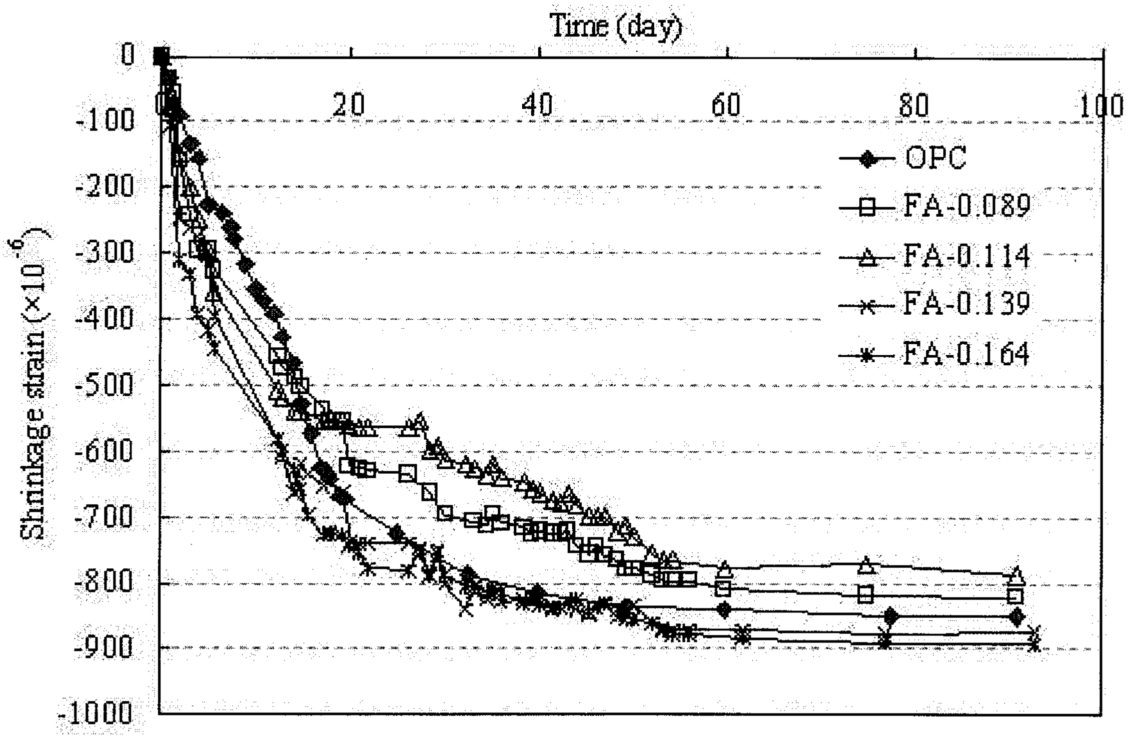

【Figure 11】

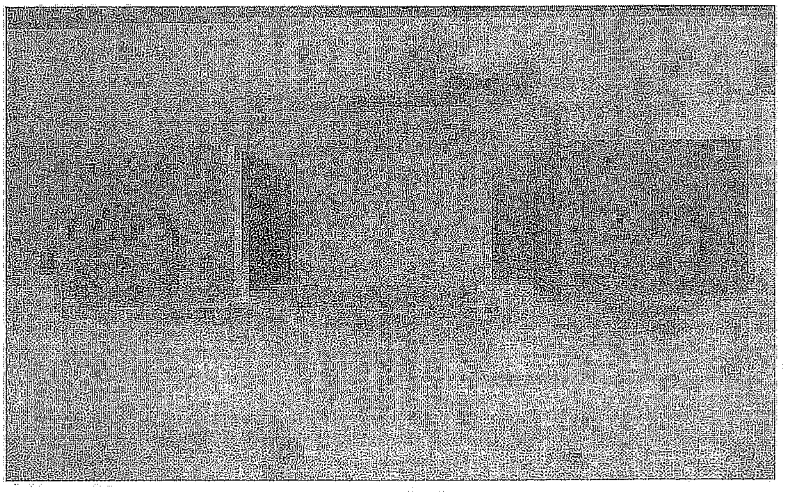

【Figure 12】

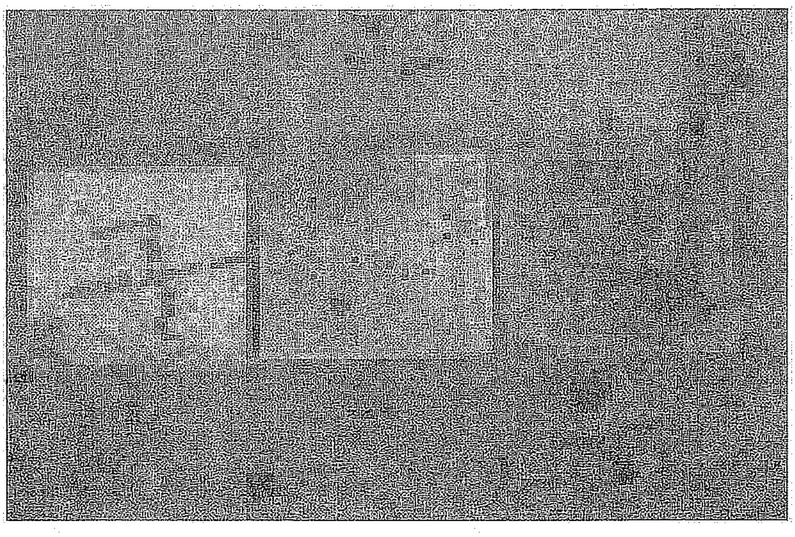

【Figure 13】

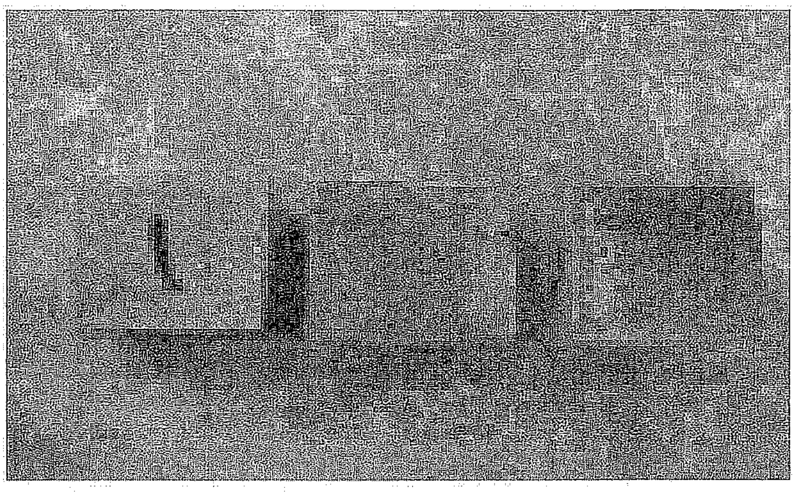

【Figure 14】

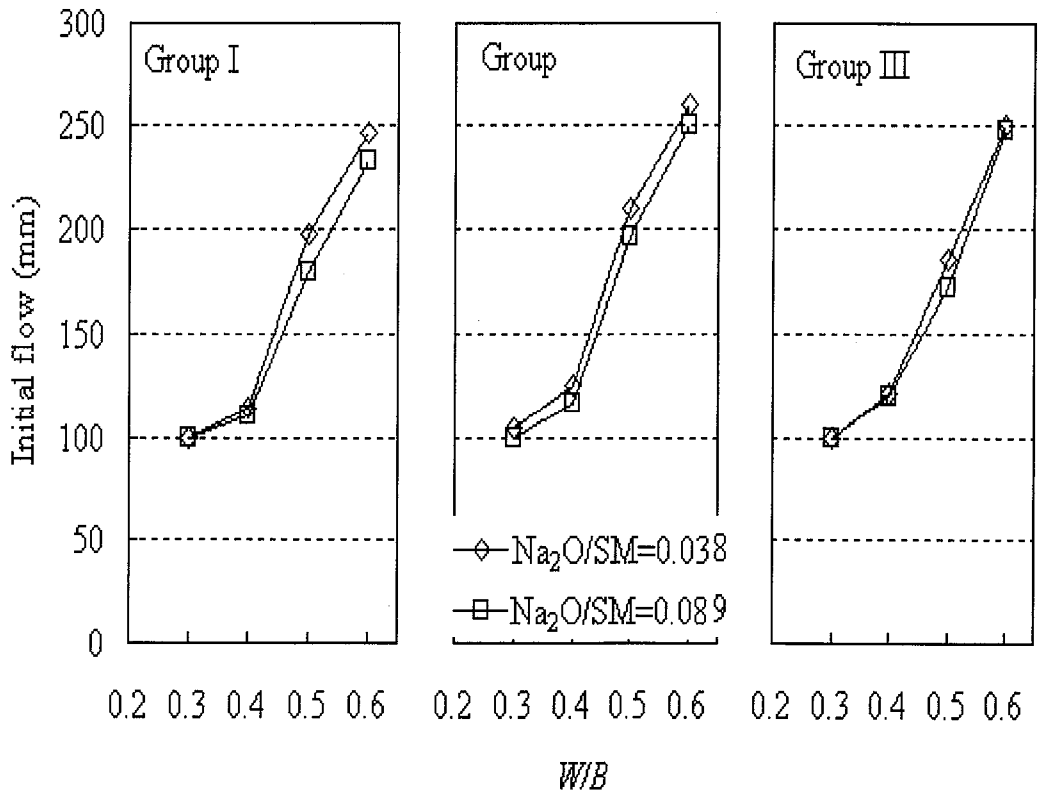
Initial flow (mm)
300
250
200
150
100
50
0
Group I
Group
Group III
$Na_2O/SM=0.038$
$Na_2O/SM=0.089$
0.2 0.3 0.4 0.5 0.6
0.2 0.3 0.4 0.5 0.6
0.2 0.3 0.4 0.5 0.6
W/B

【Figure 15】

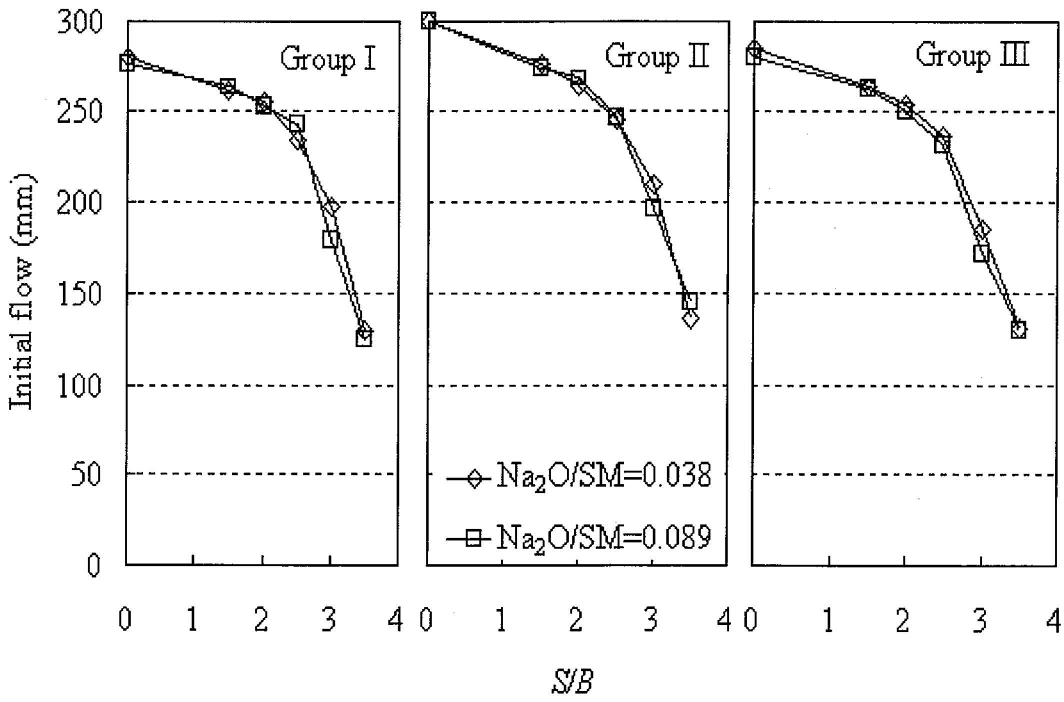


【Figure 16】

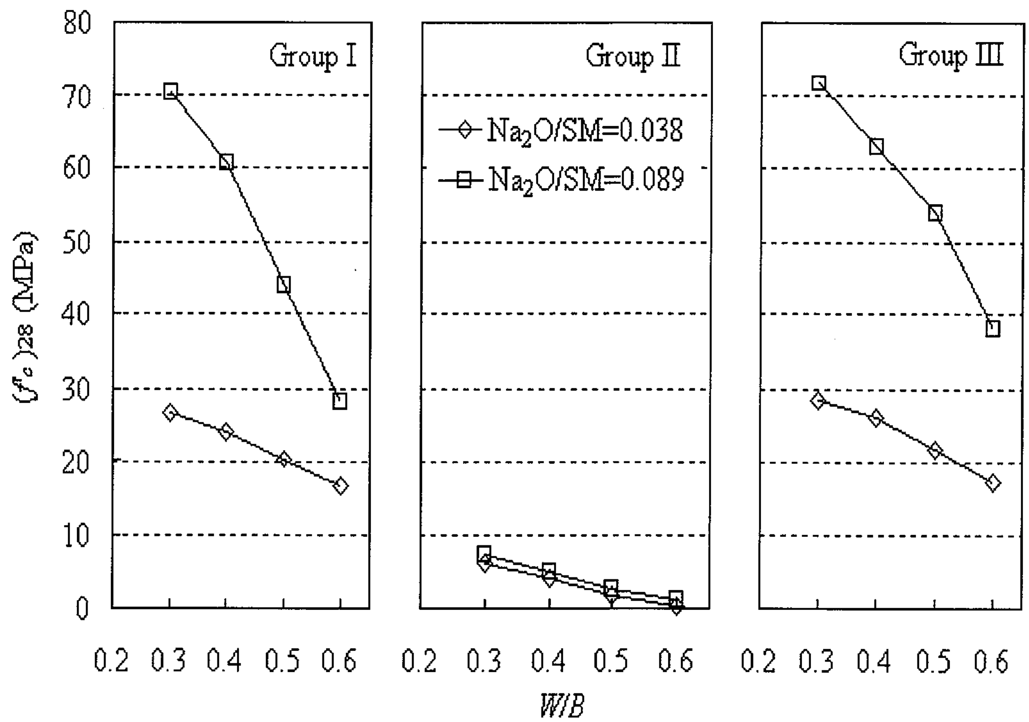

【Figure 17】

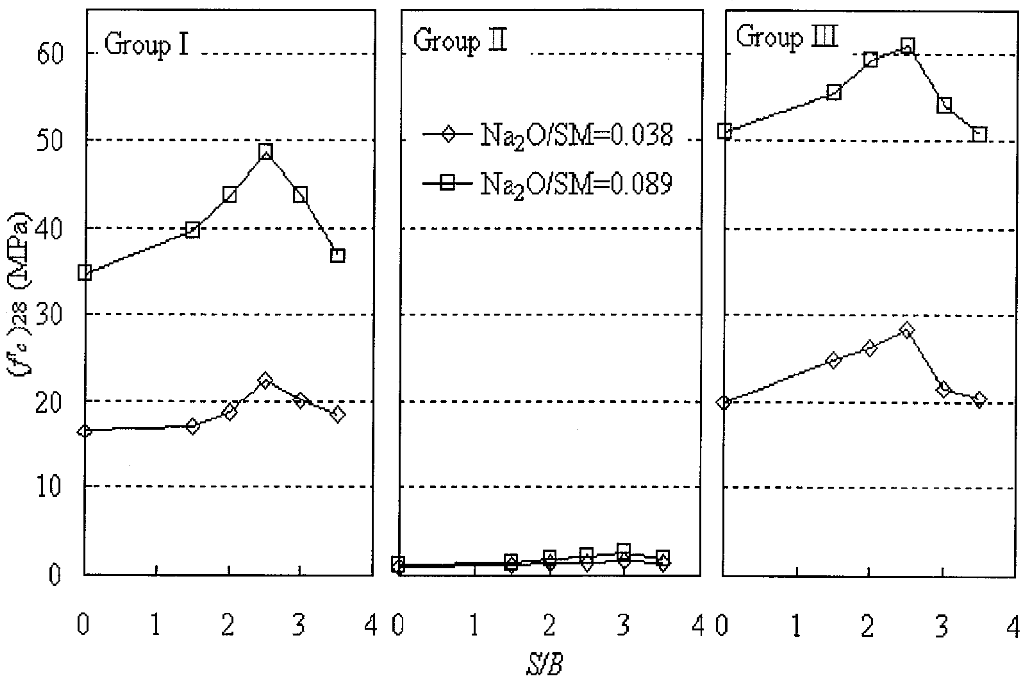
Group I
Group II
Group III
Na2O/SM=0.038
Na2O/SM=0.089
(fc)28 (MPa)
0
10
20
30
40
50
60
0 1 2 3 4
S/B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03078349 A1
- EP 0153097 A2
- FR 2881740 A1
- WO 2005097701 A2
- WO 2005049522 A2
- WO 2004076378 A1

### Non-patent literature cited in the description

- **HARDJITO D et al.** Factors Influencing the compressive strength of fly ash-based geopolymer concrete. *INTERNET CITATION,* 01 September 2004, 88-93